# EUROPEAN PATENT APPLICATION

(11) **EP 4 366 381 A1**
(43) Date of publication of application: **08.05.2024**
(21) Application number: 22831322.7
(22) Date of filing: 06.04.2022
(51) Int. Cl.: H04W 36/08

(54) **INTER-BASE-STATION HANDOVER METHOD AND APPARATUS, AND BASE STATION, ELECTRONIC DEVICE AND COMPUTER-READABLE STORAGE MEDIUM**

(30) Priority: 30.06.2021 CN 202110738181
(71) Applicant: ZTE Corporation, Shenzhen, Guangdong 518057 (CN)
(72) Inventor: HUANG, Xueying, Shenzhen, Guangdong 518057 (CN)
(74) Representative: Ipsilon
(86) International application number: PCT/CN2022/085250
(87) International publication number: WO 2023/273491

(57) **Abstract**

The present application provides an inter-base-station handover method, an inter-base-station handover apparatus, a base station, an electronic device, and a computer-readable storage medium, relates to the field of communication technologies. The inter-base-station handover method including: determining a handover type according to acquired target base station information and source base station information, the source base station information being configuration information of a source base station providing a communication service for a terminal to be handed over, the target base station information being configuration information of a target base station; and handing over a service of the terminal to be handed over from the source base station to the target base station according to the handover type.

## Description

### CROSS-REFERENCE TO RELATED APPLICATIONS

The present application claims priority to the Chinese Patent Application No. 202110738181.8 filed on June 30, 2021, the entire contents of which are incorporated herein by reference.

### TECHNICAL FIELD

The present disclosure relates to the field of communication technologies, and in particular, to an inter-base-station handover method, an inter-base-station handover apparatus, a base station, an electronic device, and a computer-readable storage medium.

### BACKGROUND

A communication protocol of next generation radio access network (NG-RAN) specifies: during a handover based on an Xn interface being performed between two physical base stations, an access and mobility management function (AMF) entity may not be switched over.

However, each physical base station may correspond to a plurality of logical base stations, and different logical base stations may be applied to different AMF application scenarios. In a case where a handover is performed between two physical base stations, or, a handover is performed between two logical base stations and the physical base stations corresponding to the two logical base stations are different, a source base station may determine a handover type of the handover, but the handover between the base stations may fail due to an error in determining the handover type.

### SUMMARY

The present application provides an inter-base-station handover method, including: determining a handover type according to acquired target base station information and source base station information, the source base station information being configuration information of a source base station providing a communication service for a terminal to be handed over, the target base station information being configuration information of a target base station; and handing over a service of the terminal to be handed over from the source base station to the target base station according to the handover type.

The present application provides an inter-base-station handover apparatus, including: a handover type determination module configured to determine a handover type according to acquired target base station information and source base station information, the source base station information being configuration information of a source base station providing a communication service for a terminal to be handed over, the target base station information being configuration information of a target base station; and a handover module configured to hand over a service of the terminal to be handed over from the source base station to the target base station according to the handover type.

The present application provides a base station, including: an inter-base-station handover apparatus configured to implement the inter-base-station handover method provided in the present application.

The present application provides an electronic device, including: at least one processor; and a memory having at least one computer program stored thereon, the at least one computer program, executed by the at least one processor, causes the at least one processor to implement the inter-base-station handover method provided in the present application.

The present application provides a computer-readable storage medium having a computer program stored thereon, the computer program, executed by a processor, causes the processor to implement the inter-base-station handover method provided in the present application.

With respect to the above aspects and other aspects of the present application and implementations thereof, further description is provided in the description of accompanying drawings, detailed implementation and claims.

### BRIEF DESCRIPTION OF DRAWINGS

Fig. 1 shows a flowchart of an inter-base-station handover method according to the present application.
Fig. 2 shows a flowchart of an inter-base-station handover method according to the present application.
Fig. 3 shows a flowchart of an inter-base-station handover method according to the present application.
Fig. 4 shows a schematic structural diagram of an inter-base-station handover apparatus according to the present application.
Fig. 5 shows a schematic structural diagram of a base station according to the present application.
Fig. 6 shows a schematic structural diagram of a communication system based on a physical base station according to the present application.
Fig. 7 shows a schematic structural diagram of an inter-base-station handover system according to the present application.
Fig. 8 shows a flowchart illustrating a handover between different logical base stations of a first operator according to an example of the present application.
Fig. 9 shows a flowchart illustrating a handover between different logical base stations, based on a common application, of a second operator according to an example of the present application.
Fig. 10 shows a flowchart illustrating a handover between different logical base stations, based on a specific application, of a second operator according to an example of the present application.
Fig. 11 shows a schematic structural diagram of an inter-base-station handover system according to the present application.
Fig. 12 shows a flowchart illustrating a handover between different logical base stations of a third operator according to an example of the present application.
Fig. 13 is a schematic diagram of exemplary hardware architecture of a computing device for implementing an inter-base-station handover method or an inter-base-station handover apparatus according to the present application.

### DETAILED DESCRIPTION

In order to make purposes, technical solutions, and advantages of the present application clearer, implementations of the present application are described below with reference to the accompanying drawings. It should be noted that the implementations of the present application and characteristics in the implementations may be combined with each other if no conflict is incurred.

Access and mobility management function region information (AMF region information) is defined in a radio interface standard 38.423 in the 3rd Generation Partnership Project (3GPP). For example, a certain physical base station may send the AMF region information corresponding to the physical base station to another physical base station through an Xn interface, so that another physical base station can conveniently determine a handover type of a handover between the base stations.

The Xn interface includes: a PerPLMN interface based on a PLMN (public land mobile network) and a common Xn interface. In a case where the common Xn interface is adopted, AMF region information corresponding to a physical base station includes: overall topological connection information based on AMF entities connected to the physical base station, a connection relationship between a certain logical base station in the physical base station and each AMF entity cannot be distinguished through the existing AMF region information. For example, the AMF region information includes: a first AMF entity, a second AMF entity, a third AMF entity, etc. connected to the physical base station. In some application scenarios of network sharing, the physical base station includes three logical base stations, and a first logical base station and a second logical base station of the three logical base stations are base stations belonging to a first operator, and a third logical base station is a base station belonging to a second operator. Which AMF entity that the first logical base station is specifically connected to cannot be determined through the existing AMF region information, during a handover between the first logical base station and another logical base station in the physical base station being performed, the first logical base station may misjudge an interface type of the logical base station to be handed over to, so that the handover between the base stations may fail due to the first logical base station misjudging the handover type of the handover between the base stations.

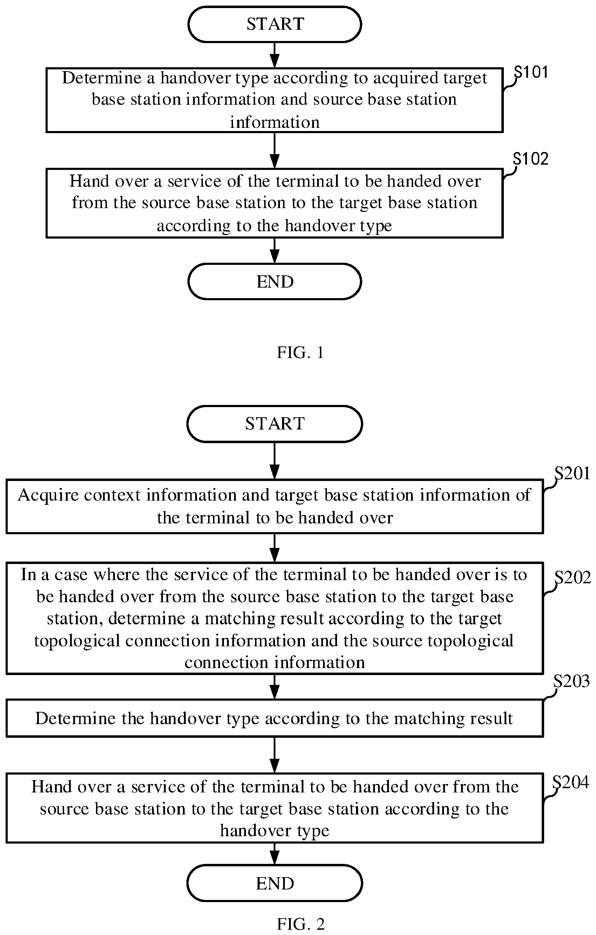

Fig. 1 shows a flowchart of an inter-base-station handover method according to the present application. The inter-base-station handover method may be applied to an inter-base-station handover apparatus set in a base station. As shown in Fig. 1, the inter-base-station handover method provided in the present application may include following operations S101 and S102.

At operation S101, determining a handover type according to acquired target base station information and source base station information.

The source base station information is configuration information of a source base station providing a communication service for a terminal to be handed over, the target base station information is configuration information of a target base station. The handover type may represent different ways of a handover between the base stations.

For example, the configuration information may include at least one of: information of an interface between the source base station and the target base station, or frequency points/frequency bands used by the source base station and the target base station. Only an example of the configuration information is illustrated above, and according to specific situations, and other examples of the configuration information not described herein are also within the protection scope of the present application, and are not repeated herein.

According to the configuration information of the source base station and the target base station, the handover type of the handover between the base stations can be determined, and the handover is accelerated.

At operation S102, handing over a service of the terminal to be handed over from the source base station to the target base station according to the handover type.

The handover refers to a procedure of transferring, in a case where the terminal performs information interaction with the source base station, the service of the terminal from a channel corresponding to the source base station to a channel corresponding to the target base station according to expectations of the service, and then performing information interaction between the terminal and the target base station, so that the target base station can provide a better communication service for the terminal.

In some implementations, the source base station includes a physical base station or a logical base station, the target base station includes a physical base station or a logical base station; the logical base station is a base station determined based on an identifier of an operator, or, a base station determined based on different service types of a same operator.

In some implementations, the handing over a service of the terminal to be handed over from the source base station to the target base station may be handing over the service of the terminal to be handed over from a physical base station to another physical base station, handing over the service of the terminal to be handed over from a logical base station to another logical base station, or handing over the service of the terminal to be handed over from a physical base station to a logical base station. However, a premise of the handover is that the source base station and the target base station both are devices belonging to a same operator, so as to guarantee accuracy of billing for the terminal to be handed over.

In the present application, according to the acquired configuration information of the source base station providing the communication service for the terminal to be handed over and the acquired configuration information of the target base station to be handed over to, a corresponding relationship between the configuration information of the source base station and the configuration information of the target base station can be acquired, the handover type of the handover is determined according to the acquired target base station information and the acquired source base station information, so as to avoid a failure of the handover, between the base stations, caused by misjudging the handover type; the service of the terminal to be handed over is handed over from the source base station to the target base station according to the handover type, so that the source base station can quickly and accurately hand over the service of the terminal to be handed over from the source base station to the target base station, the accuracy of the handover between the base stations is improved, the target base station can provide a better communication service for the terminal, a communication quality of the terminal is improved.

In some implementations, the inter-base-station handover method further includes: before operation S101, establishing a stream control transmission protocol link and a link based on the Xn interface between the source base station and the target base station.

The stream control transmission protocol link is a link based on a stream control transmission protocol (SCTP), the SCTP is a protocol for simultaneously transmitting a plurality of data streams between two physical base stations, and is a message-oriented transmission protocol under which data transmitted from an upper-layer application is transmitted between the two physical base stations in a form of a message. The link based on the Xn interface is a link established based on a point-to-point interface between two physical base stations, so as to facilitate information interaction between the two physical base stations.

The Xn interface includes: an Xn-C interface, through which reliable message interaction, based on an Xn application protocol (XnAP), between two physical base stations can be performed; the Xn interface can provide network and routing functions, and can support a flow control and a congestion control, and through the Xn interface, the efficiency of message interaction between the base stations can be improved.

In some implementations, the inter-base-station handover method further includes: before operation S101, acquiring communication information of the terminal to be handed over; and determining whether the service of the terminal to be handed over is to be handed over from the source base station to the target base station according to the communication information of the terminal to be handed over.

The communication information of the terminal to be handed over represents a current network state of the terminal to be handed over, for example, whether a communication signal of the terminal to be handed over is good, whether the terminal to be handed over can accurately receive a communication signal sent by the source base station, so that the service of the terminal to be handed over can be guaranteed to be normally performed, and the like.

Whether the service of the terminal to be handed over is to be handed over from the source base station to the target base station can be determined according to the communication information of the terminal to be handed over, and in a case where it is determined that a handover is to be performed, the service of the terminal to be handed over is handed over from the source base station to the target base station; or, in a case where it is determined that no handover is to be performed, the source base station is still used for providing the communication service for the terminal to be handed over, so that the terminal to be handed over can be guaranteed to perform the normal service processing.

In some implementations, the communication information of the terminal to be handed over includes: a first communication quality based on the source base station, or, the first communication quality based on the source base station and a second communication quality based on the target base station; the determining whether the service of the terminal to be handed over is to be handed over from the source base station to the target base station according to the communication information of the terminal to be handed over includes: in a case where it is determined that the first communication quality is not within a preset quality threshold range or the second communication quality is better than the first communication quality, determining that the service of the terminal to be handed over is to be handed over from the source base station to the target base station.

The first communication quality is a communication quality obtained by the source base station sending a first communication signal, and the terminal, to be handed over, receiving and measuring the first communication signal. The second communication quality is a communication quality obtained by the target base station sending a second communication signal, and the terminal, to be handed over, receiving and measuring the second communication signal.

For example, the first communication quality and the second communication quality may be represented by a reference signal receiving power (RSRP) or a received signal strength indicator (RSSI). If a first RSRP corresponding to the source base station is within a range of [-105dBm, -95dBm], and [-105dBm, -95dBm] is not within the preset quality threshold range, it represents that the terminal to be handed over cannot initiate an indoor service within a coverage range of the source base station, and a success rate of a call in an outdoor voice service is relatively low, and in this case, the service of the terminal to be handed over is expected to be handed over from the source base station providing the communication service for the terminal to be handed over; if a second RSRP corresponding to the target base station is within a range of [-75dBm, -65dBm], the second RSRP is better than the first RSRP, the service of the terminal to be handed over can be handed over to the target base station from the source base station, so as to improve the communication quality of the terminal.

Fig. 2 shows a flowchart of an inter-base-station handover method according to the present application. The inter-base-station handover method may be applied to an inter-base-station handover apparatus set in a base station. A difference between the flow shown in Fig. 2 and the flow shown in Fig. 1 is that, in the flow shown in Fig. 2, the handover type is determined according to target topological connection information in the target base station information and source topological connection information in the source base station information, so as to guarantee the accuracy of the handover type.

As shown in Fig. 2, the inter-base-station handover method in the present application may include following operations S201 to S204.

At operation S201, acquiring context information and target base station information of the terminal to be handed over.

The context information includes source topological connection information used for representing information of each AMF entity connected with the source base station corresponding to the terminal to be handed over. The target base station information includes target topological connection information between the target base station and any AMF entity.

At operation S202, in a case where the service of the terminal to be handed over is to be handed over from the source base station to the target base station, determining a matching result according to the target topological connection information and the source topological connection information.

The matching result represents whether a first AMF connected to the source base station corresponding to the terminal to be handed over is connected with the target base station, or, whether the source base station and the target base station are connected in a direct connection mode, and the like.

According to the matching result, a connection mode between the source base station and the target base station can be obtained during the handover, a determination of an interface for the handover is accelerated, a misjudgment of the handover type is avoided, and the accuracy of the handover is improved.

In some implementations, the source topological connection information includes: an identifier of a global radio access node corresponding to the source base station and an identifier of the first AMF. The determining a matching result according to the target topological connection information and the source topological connection information of the operation S202 may be implemented in a following manner: searching for the target topological connection information according to the identifier of the global radio access node corresponding to the source base station, and determining whether the target topological connection information includes the identifier of the first AMF; in a case where the target topological connection information includes the identifier of the first AMF, determining the matching result is that the first AMF connected to the source base station is connected with the target base station; and in a case where the target topological connection information does not include the identifier of the first AMF, determining the matching result is that the first AMF connected to the source base station is not connected with the target base station.

The target topological connection information may include an identifier of a global radio access node corresponding to the target base station and identifiers of AMF entities connected with the target base station.

The source base station can be uniquely determined, in a communication network, according to the identifier of the global radio access node corresponding to the source base station, then, the target topological connection information corresponding to the target base station is searched for according to the identifier of the global radio access node, so that whether the AMF entity connected with the source base station is coincident with any AMF entity connected with the target base station is determined, i.e., whether the source base station and the target base station are both connected to the same AMF is determined, the first AMF connected with the source base station is determined to be connected to the target base station, the matching result is relatively accurate, and a handover path of the handover from the source base station to the target base station is guaranteed to be relatively good.

At operation S203, determining the handover type according to the matching result.

The matching result includes that the source base station and the target base station are both connected to the same AMF, or the source base station and the target base station are respectively connected to different AMFs, i.e., the first AMF connected with the source base station is connected to the target base station, or the first AMF connected with the source base station is not connected to the target base station.

In a case where the matching result is determined to be that the source base station and the target base station are both connected to the same AMF (i.e., the first AMF connected to the source base station is connected to the target base station), the handover type of the handover from the source base station to the target base station is determined to be based on an Xn interface, i.e., the handover from the source base station to the target base station is a handover based on the Xn interface; and in a case where the matching result is determined to be that the source base station and the target base station are respectively connected to different AMFs (i.e., the first AMF connected to the source base station is not connected to the target base station), the handover type of the handover from the source base station to the target base station is determined to be based on an NG interface, i.e., the handover from the source base station to the target base station is a handover based on the NG interface.

The handover based on the Xn interface represents that the AMF is not to be switched over during performing the handover between the source base station and the target base station, the handover based on the NG interface represents that the AMF is to be switched over during performing the handover between the source base station and the target base station.

It should be noted that, the NG interface represents an interface between a radio access network device (e.g., the base station, etc.) and a 5G core network device (e.g., the AMF entity, etc.). If the handover type of the handover from the source base station to the target base station is based on the Xn interface, it indicates that, during the service of the terminal to be handed over being handed over from the source base station to the target base station, the handover can be achieved by information interaction between the two base stations through the Xn interface without passing through the AMF entity; if the handover type of the handover from the source base station to the target base station is based on the NG interface, it indicates that, a handover request message sent by the source base station is expected to pass through a first AMF entity connected to the source base station and a second AMF entity connected to the target base station to reach the target base station; and a handover response message fed back by the target base station is expected to pass through the second AMF entity connected with the target base station and the first AMF entity connected to the source base station to reach the source base station. The handover based on the NG interface results in a relatively longer handover delay, and relatively more devices interact to each other.

By determining the measuring result, the handover type of the handover from the source base station to the target base station can be determined explicitly, it can avoid that the handover based on the Xn interface is to be misjudged as the handover based on the NG interface, the handover is accelerated, and the accuracy of the handover between the base stations is improved.

At operation S204, handing over a service of the terminal to be handed over from the source base station to the target base station according to the handover type.

It should be noted that the operation S204 is the same as the operation S102, and thus is not repeated herein.

In some implementations, the inter-base-station handover method further includes: after the operation S204, in a case where AMF region information is changed, updating the target topological connection information and the source topological connection information.

Specifically, the target topological connection information may be updated by notifying the target topological connection information between the target base station and each AMF entity to other base stations in a manner of sending a broadcast message by the target base station; similarly, the source base station may also notify the source topological connection information between the source base station and each AMF entity to other base stations by sending a broadcast message. By ensuring each base station to be enabled to quickly and accurately obtain the topological connection information between other base stations and AMF entities, the accuracy of the handover between the base stations is guaranteed.

In the inter-base-station handover method provided in the present application, from the target topological connection information between the target base station and the AMF, the AMF information corresponding to the target base station can be obtained; from the source topological connection information between the source base station and the AMF, the AMF information corresponding to the source base station can be obtained, so that a topological connection relationship among the target base station, the source base station and the AMF can be confirmed, the source base station and the target base station can be matched according to the topological connection relationship among such three devices, the handover type is then determined, a failure of the handover, between the base stations, caused by the source base station misjudging the interface type of the target base station is avoided, the source base station can quickly and accurately hand over the service of the terminal from the source base station to the target base station, the accuracy of the handover between the base stations is improved, and the communication quality of the terminal is improved.

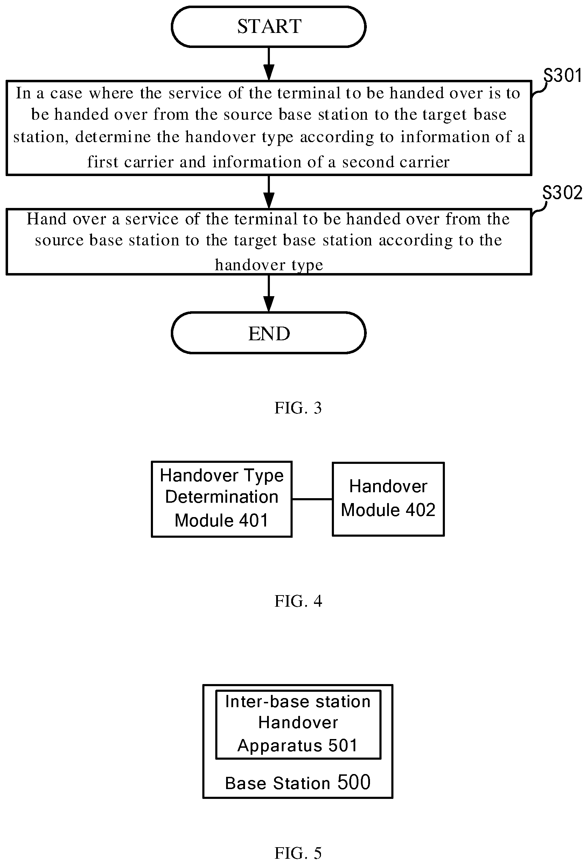

Fig. 3 shows a flowchart of an inter-base-station handover method according to the present application. The inter-base-station handover method may be applied to an inter-base-station handover apparatus set in a base station. A difference between the flow shown in Fig. 3 and the flow shown in Fig. 1 is that, in the flow shown in Fig. 3, the handover type is determined according to carrier information of the target base station and carrier information of the source base station, and the handover type can be directly determined according to the carrier information, so as to accelerate the determination of the handover type, and improve the efficiency of the handover.

As shown in Fig. 3, the inter-base-station handover method in the present application may include following operations S301 and S302.

At operation S301, in a case where the service of the terminal to be handed over is to be handed over from the source base station to the target base station, determining the handover type according to information of a first carrier and information of a second carrier (i.e., carrier information).

The source base station information further includes: the information of the first carrier used by the source base station for providing a communication service for the terminal to be handed over, the information of the first carrier includes a first physical frequency point or a number corresponding to the first physical frequency point; and the target base station information further includes: the information of the second carrier used by the target base station for providing a communication service for the terminal to be handed over, the information of the second carrier includes a second frequency point or a number corresponding to the second physical frequency point.

For example, the target base station may number physical frequency points belonging to the target base station to obtain a corresponding relationship between each physical frequency point and the number. For example, if the terminal to be handed over currently uses a frequency point numbered 125, the frequency point corresponding to the terminal to be handed over can be determined to be 2.6GHz by looking up a number table.

By analyzing different carrier information (i.e., information of carriers), the handover type can be determined from a physical layer, and the topological connection relationship corresponding to the source base station or the target base station is not expected to be determined, so that a determination of the handover type is accelerated, and the accuracy of the handover between the base stations is improved.

In some implementations, the determining the handover type according to information of a first carrier and information of a second carrier in the operation S301 may be implemented in a following manner: in a case where an identifier of an operator to which a first carrier belongs is determined to be same as an identifier of an operator to which a second carrier belongs, comparing the identifier of the first carrier with the identifier of the second carrier to obtain a comparison result; and in a case where the comparison result is that the identifier of the first carrier and the identifier of the second carrier are different from each other, determining the handover type of the handover is based on an NG interface.

Specifically, the information of the first carrier includes the identifier of the first carrier and the identifier of the operator to which the first carrier belongs, the information of the second carrier includes the identifier of the second carrier and the identifier of the operator to which the second carrier belongs.

For example, the source base station may acquire, through information interaction with the target base station, that the target base station uses the second carrier as a transmission bearer for carrying communication information, but the source base station uses the first carrier as a transmission bearer for carrying communication information, and the two base stations have different carrier information (i.e., information of carriers), and thus the handover type of the handover between the source base station and the target base station can be determined to be based on the NG interface, i.e., the AMF entity is to be switched over during performing the handover between the base stations.

It should be noted that, in a case where identifiers of carriers used by two base stations belonging to the same operator are the same, the handover may also be performed between the two base stations, but generally, a network optimization engineer may perform performance optimization on this type of handover, e.g., the handover is not to be performed between the base stations utilizing the carriers having the same identifier and belonging to the same operator, so as to avoid resource waste.

At operation S302, handing over a service of the terminal to be handed over from the source base station to the target base station according to the handover type.

It should be noted that the operation S302 is the same as the operation S102, and thus is not repeated herein.

In the inter-base-station handover method provided in the present application, the handover type is determined according to the information of the carriers used by the base stations, and the topological connection relationship corresponding to the source base station or the target base station is not expected to be determined, so that the determination for the handover type is accelerated, and the accuracy of the handover between the base stations is improved.

An inter-base-station handover apparatus provided in the present application is described in detail below with reference to the accompanying drawings. Fig. 4 shows a schematic structural diagram of an inter-base-station handover apparatus according to the present application. As shown in Fig. 4, the inter-base-station handover apparatus may include a handover type determination module 401 and a handover module 402.

The handover type determination module 401 is configured to determine a handover type according to acquired target base station information and source base station information, the source base station information is configuration information of a source base station providing a communication service for a terminal to be handed over, the target base station information is configuration information of a target base station; and the handover module 402 is configured to hand over a service of the terminal to be handed over from the source base station to the target base station according to the handover type.

According to the inter-base-station handover apparatus provided in the present application, from the configuration information of the source base station providing the communication service for the terminal to be handed over and the configuration information of the target base station to be handed over to, the handover type determination module 401 can acquire a corresponding relationship between the configuration information of the source base station and the configuration information of the target base station, the handover type is determined according to the acquired target base station information and the acquired source base station information, so as to avoid a failure, of the handover between the base stations, caused by misjudging the handover type; the handover module 402 can hand over the service of the terminal to be handed over from the source base station to the target base station according to the handover type, so that the source base station can quickly and accurately hand over the service of the terminal to be handed over from the source base station to the target base station, the accuracy of the handover between the base stations is improved, the target base station can provide a better communication service for the terminal, a communication quality of the terminal is improved.

Fig. 5 shows a schematic structural diagram of a base station according to the present application. As shown in Fig. 5, the base station 500 may include an inter-base station handover apparatus 501.

The inter-base station handover apparatus 501 is configured to implement the inter-base station handover method provided in the present application.

The base station 500 may be a physical base station, or a logical base station determined based on an identifier of an operator or based on different service types of the same operator.

According to the base station 500 provided in the present application, from the acquired configuration information of the source base station providing the communication service for the terminal to be handed over and the acquired configuration information of the target base station to be handed over to, a corresponding relationship between the configuration information of the source base station and the configuration information of the target base station can be acquired, the handover type is determined according to the acquired target base station information and the acquired source base station information, so as to avoid a failure, of the handover between the base stations, caused by misjudging the handover type; the service of the terminal to be handed over is handed over from the source base station to the target base station according to the handover type, so that the source base station can quickly and accurately hand over the service of the terminal to be handed over from the source base station to the target base station, the accuracy of the handover between the base stations is improved, the target base station can provide a better communication service for the terminal, a communication quality of the terminal is improved.

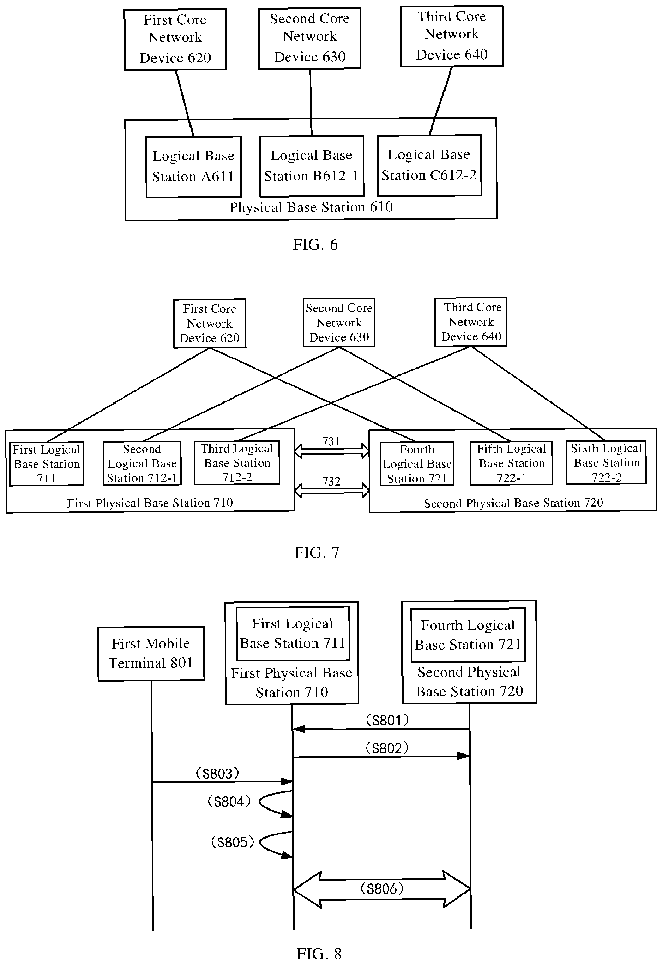

Fig. 6 shows a schematic structural diagram of a communication system based on a physical base station according to the present application. As shown in Fig. 6, the communication system includes following devices: a physical base station 610, a first core network device 620, a second core network device 630, and a third core network device 640.

The physical base station 610 is a physical base station for a certain operator or for certain operators. The physical base station 610 includes a logical base station A611, a logical base station B612-1, and a logical base station C612-2. The logical base station A611 is a logical base station belonging to a first operator, the logical base station B612-1 and the logical base station C612-2 are logical base stations belonging to a second operator, and the logical base station C612-2 is a logical base station oriented to special applications.

It should be noted that, the logical base station A611 uses a first carrier as a transmission bearer for carrying communication information; the logical base station C612-2 uses a second carrier as a transmission bearer for carrying communication information; the logical base station B612-1 may share the first carrier, with the logical base station A611, as a transmission bearer for carrying communication information, or the logical base station B612-1 may share the second carrier, with a third logical base station 611, as the transmission bearer for carrying the communication information (not shown in Fig. 6). Moreover, core network devices connected to different logical base stations are different. As shown in Fig. 6, the logical base station A611 is connected to the first core network device 620 belonging to the first operator; the logical base station B612-1 is connected to the second core network device 630 belonging to the second operator; and the logical base station C612-2 is connected to the third core network device 640 belonging to the second operator and oriented to special applications.

In the communication system based on the physical base station in the present application, a connection relationship between different logical base stations in the same physical base station and the corresponding core network devices can be determined, so that, during a handover being performed between the physical base station or a certain logical base station in the physical base station and another base station, a connection relationship between each logical base station and the corresponding core network device can be clearly obtained, thereby avoiding a misjudgment of the handover type of the handover between the base stations, and improving the accuracy of the handover between the base stations.

Fig. 7 shows a schematic structural diagram of an inter-base-station handover system according to the present application. As shown in Fig. 7, the inter-base-station handover system includes following devices: a first physical base station 710, a second physical base station 720, the first core network device 620, the second core network device 630, and the third core network device 640.

The first physical base station 710 includes: a first logical base station 711, a second logical base station 712-1, and a third logical base station 712-2. The second physical base station 720 includes: a fourth logical base station 721, a fifth logical base station 722-1, and a sixth logical base station 722-2. A link 731 based on an Xn interface and a link 732 based on SCTP are established between the first physical base station 710 and the second physical base station 720.

It should be noted that the first logical base station 711 and the fourth logical base station 721 are logical base stations belonging to a first operator, and the second logical base station 712-1, the third logical base station 712-2, the fifth logical base station 722-1, and the sixth logical base station 722-2 are logical base stations belonging to a second operator. The third logical base station 712-2 and the sixth logical base station 722-2 are logical base stations oriented to special applications.

As shown in Fig. 7, the first logical base station 711 and the fourth logical base station 721 are connected to the first core network device 620 belonging to the first operator; the second logical base station 712-1 and the fifth logical base station 722-1 are connected to the second core network device 630 belonging to the second operator; and the third logical base station 712-2 and the sixth logical base station 722-2 are connected to the third core network device 640 belonging to the second operator and oriented to special applications.

The first logical base station 711 and the fourth logical base station 721 both use a first carrier as a transmission bearer for carrying communication information; the third logical base station 712-2 and the sixth logical base station 722-2 both use a second carrier as a transmission bearer for carrying communication information; the second logical base station 712-1 may share the first carrier, with the first logical base station 711, as a transmission bearer for carrying communication information, or share the second carrier, with the third logical base station 712-2, as a transmission bearer for carrying communication information; the fifth logical base station 722-1 may share the first carrier, with the fourth logical base station 721, as a transmission bearer for carrying communication information, or share the second carrier, with the sixth logical base station 722-2, as a transmission bearer for carrying communication information (not shown in Fig. 7).

A procedure of a handover between different logical base stations is illustrated as follows by providing examples in conjunction with the connection relationship between each logical base station and the core network device in Fig. 7.

Fig. 8 shows a flowchart illustrating a handover between different logical base stations of a first operator according to an example of the present application. As shown in Fig. 8, the handover between the first logical base station 711 and the fourth logical base station 721 of the first operator includes operations S801 to S806

At operation S801, the second physical base station 720 sends a first setup request message to the first physical base station 710 through a common Xn interface.

The first setup request message includes: topological connection information between the second physical base station 720 and each core network device. For example, the first setup request message includes following information that: the second physical base station 720 includes the fourth logical base station 721, the fifth logical base station 722-1, and the sixth logical base station 722-2; the fourth logical base station 721 is connected to the first core network device 620 belonging to the first operator; the fifth logical base station 722-1 is connected to the second core network device 630 belonging to the second operator; and the sixth logical base station 722-2 is connected to the third core network device 640 belonging to the second operator and oriented to special applications.

The core network device in Fig. 8 may be a core network device in a fifth generation mobile communication technology (5G) network, or an AMF entity, each of which is only an example of the core network device, and according to specific situations, other examples of the core network device not described herein are also within the protection scope of the present application, but are not repeated herein.

In some implementations, the setup request message may be defined in a cell format as shown in Table 1. Table 1 shows AMF region information in an example.

**Table 1 AMF region information**

| Identifier name | Field type | Range | Identifier type |
|---|---|---|---|
| Identifier of global AMF region information | | 1 to a maximum number of AMF region identifiers | |
| PLMN identifier | Important field | | Type determined based on 3GPP 38.423 standard |
| AMF region identifier | | 1 | |
| AMF region identifier | Important field | | BIT STRING (SIZE (8)) |
| Identifier of global radio access node | Optional field | 1 to a maximum number of radio access nodes | |

The BIT STRING (SIZE (8)) represents a type of string expressed in 8 bits.

At operation S802, after receiving the first setup request message, the first physical base station 710 stores topological connection information between the second physical base station 720 and each core network device, and sends a first setup request response message to the second physical base station 720.

The first setup request response message includes: topological connection information between the first physical base station 710 and each core network device. For example, the first setup request response message includes that: the first physical base station 710 includes the first logical base station 711, the second logical base station 712-1, and the third logical base station 712-2; the first logical base station 711 is connected to the first core network device 620 belonging to the first operator; the second logical base station 712-1 is connected to the second core network device 630 belonging to the second operator; and the third logical base station 712-2 is connected to the third core network device 640 belonging to the second operator and oriented to special applications.

It should be noted that, through operations S801 and S802, each of the first physical base station 710 and the second physical base station 720 can acquire the topological connection information of the other physical base station at an opposite side, so as to facilitate a subsequent handover between the logical base stations of the two physical base stations, thereby guarantying the accuracy of the handover type. In a case where the AMF region information is changed, each physical base station can notify other physical base stations of the updated AMF region information in a way of sending a node configuration update message of the radio access network, so as to guarantee synchronous updating of the AMF region information between the physical base stations.

At operation S803, a first mobile terminal 801 sends a measurement report message to the first logical base station 711 at a preset time interval (e.g., 5ms).

The first mobile terminal 801 is a terminal that the communication service thereof is provided by the first operator.

At operation S804, the first logical base station 711, by repeatedly obtaining the measurement report message sent by the first mobile terminal 801, learns that the current communication quality of the first mobile terminal 801 is relatively poor and the first mobile terminal 801 desires to be handed over to a cell corresponding to the fourth logical base station 721, so as to improve the communication quality of the first mobile terminal 801.

For example, the first logical base station 711, by analyzing the measurement report message sent by the first mobile terminal 801, learns that the current communication quality of the first mobile terminal 801 related to the first logical base station 711 is not within a preset quality threshold range (e.g., the current first communication quality is represented by a first RSRP, the first RSRP is within a range of [-105dBm, -95dBm], and [-105dBm, -95dBm] is not in a preset quality threshold range, it represents that the first mobile terminal 801 cannot initiate an indoor service within a coverage range of the first logical base station 711, and a success rate of a call in an outdoor voice service is relatively low), or, a second communication quality of the first mobile terminal 801 related to the fourth logical base station 721 is better than a first communication quality of the first mobile terminal 801 related to the first logical base station 711 (e.g., the second communication quality is represented by a second RSRP, the second RSRP is within a range of [ -75dBm, -65dBm ], and is better than the first RSRP), it is determined that a service of the first mobile terminal 801 is to be handed over from the first logical base station 711 to the fourth logical base station 721.

At operation S805, the first logical base station 711 determines, according to the information obtained in above operations S801 to S804, that a handover type of a handover from the first logical base station 711 to the fourth logical base station 721 is based on an Xn interface.

The first logical base station 711 can know, from the topological connection information between the second physical base station 720 and each core network device and acquired in operation S801, that both the first logical base station 711 and the fourth logical base station 721 belong to the first operator and are connected to the first core network device 620; and the link 731 based on the Xn interface is established between the first physical base station 710 and the second physical base station 720. Therefore, the handover, based on the Xn interface, between the first logical base station 711 and the fourth logical base station 721 can be performed without switching the AMF entity.

At operation S806, the handover based on the Xn interface is performed through the link 731 based on the Xn interface between the first logical base station 711 and the fourth logical base station 721.

In the example, the first logical base station 711 can determine, from the acquired topological connection information between the second physical base station 720 and each core network device, that the first logical base station 711 and the fourth logical base station 721 both belong to the first operator and are connected to the first core network device 620, and the handover based on the Xn interface can be performed between the first logical base station 711 and the fourth logical base station 721, thereby avoiding a failure of the handover caused by misjudging the handover type, and improving the accuracy of the handover.

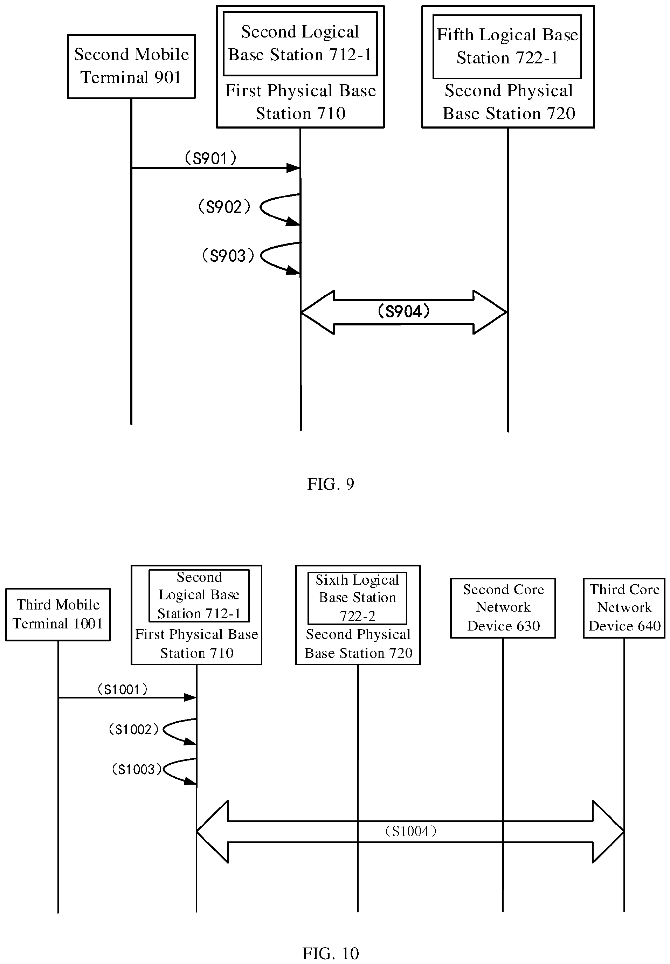

Fig. 9 shows a flowchart illustrating a handover between different logical base stations, based on a common application, of a second operator according to an example of the present application. It should be noted that, each of the first physical base station 710 and the second physical base station 720 has obtained the topological connection information between the other physical base station at an opposite side and each core network device through a message interaction between the physical base stations, and stored the topological connection information. Therefore, the second logical base station 712-1 and the fifth logical base station 722-1 of the second operator do not repeat above operations S801 and S802 during the handover.

As shown in Fig. 9, the handover between the second logical base station 712-1 and the fifth logical base station 722-1 of the second operator includes operations S901 to S904.

At operation S901, the second mobile terminal 901 sends a measurement report message to the second logical base station 712-1 at a preset time interval (e.g., 5ms).

The second mobile terminal 901 is a terminal that the communication service thereof is provided by the second operator.

At operation S902, the second logical base station 712-1, by repeatedly obtaining the measurement report message sent by the second mobile terminal 901, learns that the current communication quality of the second mobile terminal 901 is relatively poor and the second mobile terminal 901 desires to be handed over to a cell corresponding to the fifth logical base station 722-1, so as to improve the communication quality of the second mobile terminal 901.

At operation S903, the second logical base station 712-1 determines, according to the information obtained in the operation S902, that a handover type of the handover from the second logical base station 712-1 to the fifth logical base station 722-1 is based on the Xn interface.

The second logical base station 712-1 can know, from the topological connection information obtained in advance between the second physical base station 720 and each core network device, that the second logical base station 712-1 and the fifth logical base station 722-1 both belong to the second operator and are connected to the second core network device 630; and the link 731 based on the Xn interface is established between the first physical base station 710 and the second physical base station 720. Therefore, the handover based on the Xn interface can be performed between the second logical base station 712-1 and the fifth logical base station 722-1 without switching the AMF entity.

At operation S904, the handover based on the Xn interface is performed through the link 731 based on the Xn interface between the second logical base station 712-1 and the fifth logical base station 722-1.

In the example, the second logical base station 712-1 determines, from the acquired topological connection information between the second physical base station 720 and each core network device, that the second logical base station 712-1 and the fifth logical base station 722-1 both belong to the second operator and are connected to the second core network device 630, and the handover based on the Xn interface can be performed between the second logical base station 712-1 and the fifth logical base station 722-1, thereby avoiding a failure of the handover caused by misjudging the handover type, and improving the accuracy of the handover.

Fig. 10 shows a flowchart illustrating a handover between different logical base stations, based on a specific application, of a second operator according to an example of the present application. The specific application may be an application corresponding to a mobile terminal adopting different frequency bands, for example, the terminal may support a service of a frequency band of 700MHz (e.g., a broadcast television service, etc.), and may also support a service of a frequency band of 2.6GHz (e.g., an online video service based on the 4th generation mobile communication technology (4G) network, etc.). Only an example of the specific application is illustrated above, and according to specific situations, and other examples of the specific application not described herein are also within the protection scope of the present application, but are not repeated herein. As shown in Fig. 10, the handover between the second logical base station 712-1 and the sixth logical base station 722-2 of the second operator includes following operations S1001 to S 1004.

At operation S1001, a third mobile terminal 1001 sends a measurement report message to the second logical base station 712-1 at a preset time interval (e.g., 5ms).

The third mobile terminal 1001 is a terminal that the communication service thereof is provided by the second operator, and supports not only a service based on a common application but also a service based on a special application.

At operation S1002, the second logical base station 712-1 learns, by repeatedly obtaining the measurement report message sent by the third mobile terminal 1001, learns that the current communication quality of the third mobile terminal 1001 is relatively poor and the third mobile terminal 1001 desires to be handed over to a cell corresponding to the sixth logical base station 722-2, so as to improve the communication quality of the third mobile terminal 1001, and enable the third mobile terminal 1001 to perform service processing for the specific application within a coverage range of the sixth logical base station 722-2.

At operation S1003, the second logical base station 712-1 determines, according to the information obtained in the operation S 1001, that a handover type of the handover from the second logical base station 712-1 to the sixth logical base station 722-2 is based on the NG interface.

The second logical base station 712-1 can know, from the topological connection information obtained in advance between the second physical base station 720 and each core network device, that: 1) the second logical base station 712-1 and the sixth logical base station 722-2 both belong to the second operator; 2) the second logical base station 712-1 is connected to the second core network device 630, and the sixth logical base station 722-2 is connected to the third core network device 640; 3) the link 731 based on the Xn interface is established between the first physical base station 710 and the second physical base station 720. However, since the second logical base station 712-1 and the sixth logical base station 722-2 are connected to different core network devices, the link 731 based on the Xn interface cannot be used for the handover, and the handover based on the NG interface is expected to be performed, i.e., the AMF entity is expected to be switched over (i.e., a message interaction between the second core network device 630 and the third core network device 640 is expected to be implemented, so as to implement the handover between the base stations).

In some implementations, the second logical base station 712-1 may also determine the handover type according to the acquired information of the carrier used by the sixth logical base station 722-2.

For example, the second logical base station 712-1 may learn, through information interaction with the sixth logical base station 722-2, that the sixth logical base station 722-2 uses a second carrier as a transmission bearer for carrying communication information, but the second logical base station 712-1 uses a first carrier as a transmission bearer for carrying communication information, and the two logical base stations have different carrier information (i.e., information of carriers), and thus it is determined that the handover based on the NG interface is to be performed between the second logical base station 712-1 and the sixth logical base station 722-2, i.e., the AMF entity is expected to be switched over.

The handover type is directly determined according to the carrier information, so that a determination of the handover type can be accelerated, and the efficiency of the handover is improved.

At operation S 1004, a service of the third mobile terminal 1001 is handed over from the second logical base station 712-1 to the sixth logical base station 722-2 through the handover based on the NG interface between the second logical base station 712-1 and the sixth logical base station 722-2.

In the example, the second logical base station 712-1 can determine, through the obtained topological connection information between the second physical base station 720 and each core network device, that the second logical base station 712-1 and the sixth logical base station 722-2 are connected to different core network devices, and the handover based on the NG interface is expected to be performed between the two base stations; the second logical base station 712-1 may also learn from a physical layer, through information interaction with the sixth logical base station 722-2, that a carrier used by the sixth logical base station 722-2 is different from a carrier used by the second logical base station 712-1, and the handover based on the NG interface is expected to be performed between the two base stations. Through different determination manners, the handover type is accurately determined, thereby avoiding a failure of the handover caused by misjudging the handover type, and improving the accuracy of the handover.

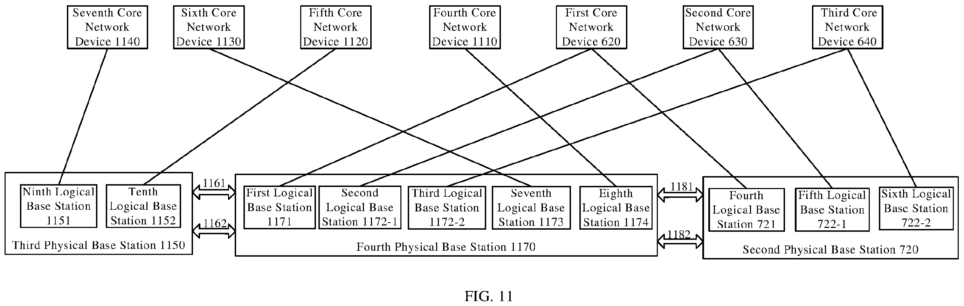

Fig. 11 shows a schematic structural diagram of an inter-base-station handover system according to the present application. As shown in Fig. 11, the inter-base-station handover system includes following devices: the second physical base station 720, a third physical base station 1150, a fourth physical base station 1170, the first core network device 620, the second core network device 630, the third core network device 640, a fourth core network device 1110, a fifth core network device 1120, a sixth core network device 1130, and a seventh core network device 1140.

The fourth physical base station 1170 includes: a first logical base station 1171, a second logical base station 1172-1, a third logical base station 1172-2, a seventh logical base station 1173, and an eighth logical base station 1174. The second physical base station 720 includes: the fourth logical base station 721, the fifth logical base station 722-1, and the sixth logical base station 722-2. The third physical base station 1150 includes: a ninth logical base station 1151 and a tenth logical base station 1152.

A link 1181 based on the Xn interface and a link 1182 based on the SCTP are established between the fourth physical base station 1170 and the second physical base station 720. A link 1161 based on the Xn interface and a link 1162 based on the SCTP are established between the fourth physical base station 1170 and the third physical base station 1150.

It should be noted that the first logical base station 1171 and the fourth logical base station 721 are logical base stations belonging to the first operator, and the second logical base station 1172-1, the third logical base station 1172-2, the fifth logical base station 722-1, and the sixth logical base station 722-2 are logical base stations belonging to the second operator. Moreover, the third logical base station 1172-2 and the sixth logical base station 722-2 are logical base stations oriented to special applications. The seventh logical base station 1173 and the ninth logical base station 1151 are logical base stations belonging to the third operator, and the eighth logical base station 1174 and the tenth logical base station 1152 are both logical base stations belonging to a fourth operator.

As shown in Fig. 11, the first logical base station 1171 and the fourth logical base station 721 are both connected to the first core network device 620 belonging to the first operator; the second logical base station 1172-1 and the fifth logical base station 722-1 are both connected to the second core network device 630 belonging to the second operator; and the third logical base station 1172-2 and the sixth logical base station 722-2 are both connected to the third core network device 640 belonging to the second operator and oriented to special applications.

The fourth core network device 1110 and the fifth core network device 1120 are core network devices belonging to the fourth operator, and the sixth core network device 1130 and the seventh core network device 1140 are core network devices belonging to the third operator. The seventh logical base station 1173 is connected to the sixth core network device 1130, the eighth logical base station 1174 is connected to the fourth core network device 1110, the ninth logical base station 1151 is connected to the seventh core network device 1140, and the tenth logical base station 1152 is connected to the fifth core network device 1120.

The first logical base station 1171 and the fourth logical base station 721 both use the first carrier as a transmission bearer for carrying communication information; the third logical base station 1172-2 and the sixth logical base station 722-2 both use the second carrier as a transmission bearer for carrying communication information; and the second logical base station 1172-1 may share the first carrier, with the first logical base station 1171, as a transmission carrier for carrying communication information, or the second logical base station 1172-1 may share the second carrier, with the third logical base station 1172-2, as a transmission carrier for carrying communication information; the fifth logical base station 722-1 may share the first carrier, with the fourth logical base station 721, as a transmission carrier for carrying communication information, or the fifth logical base station 722-1 may share the second carrier, with the sixth logical base station 722-2, as a transmission carrier for carrying communication information (not shown in Fig. 11). The ninth logical base station 1151 uses the first carrier as a transmission carrier for carrying communication information, and the tenth logical base station 1152 uses the second carrier as a transmission carrier for carrying communication information. The seventh logical base station 1173 and the eighth logical base station 1174 both use the second carrier as a transmission carrier for carrying communication information.

Each logical base station in the inter-base station handover system shown in Fig. 11 may be a base station based on an independent networking mode, or may be a base station supporting both the independent networking mode and a non-independent networking mode. The second physical base station 720 shown in Fig. 11 is the same as the second physical base station 720 shown in Fig. 7. In the inter-base station handover system provided in Fig. 11, a procedure of a handover between the fourth physical base station 1170 and the third physical base station 1150 is focused on.

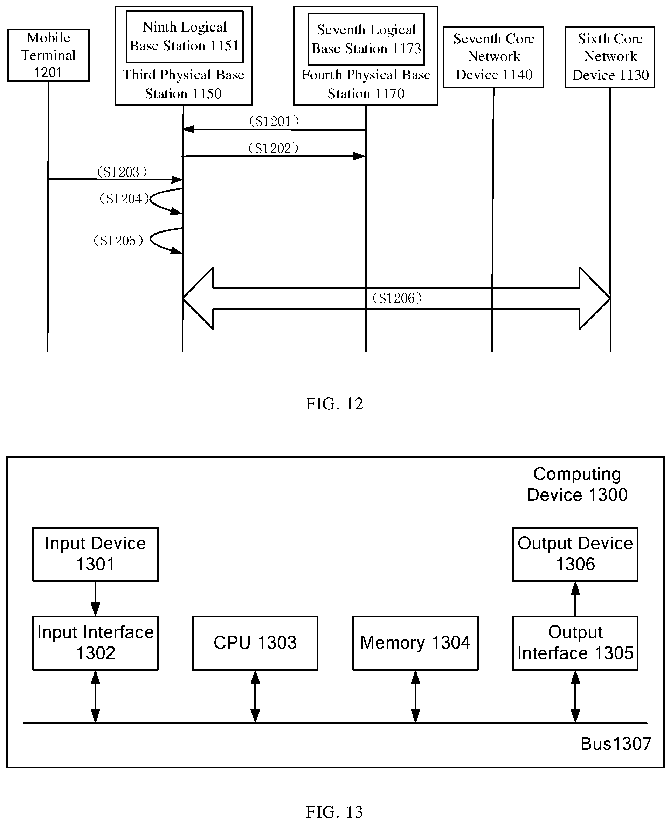

Fig. 12 shows a flowchart illustrating a handover between different logical base stations of a third operator according to an example of the present application. As shown in Fig. 12, the handover between different logical base stations (i.e., the seventh logical base station 1173 and the ninth logical base station 1151) of the third operator includes following operations S 1201 and S 1206.

At operation S1201, the fourth physical base station 1170 sends a second setup request message to the third physical base station 1150 through a common Xn interface.

The second setup request message includes: topological connection information between the fourth physical base station 1170 and each core network device. For example, the topological connection information may include following information that: the fourth physical base station 1170 includes the first logical base station 1171, the second logical base station 1172-1, the third logical base station 1172-2, the seventh logical base station 1173, and the eighth logical base stations 1174; the first logical base station 1171 is connected to the first core network device 620 belonging to the first operator; the second logical base station 1172-1 is connected to the second core network device 630 belonging to the second operator; the third logical base station 1172-2 is connected to the third core network device 640 belonging to the second operator and oriented to special applications; the seventh logical base station 1173 is connected to the sixth core network device 1130 belonging to the third operator; and the eighth logical base station 1174 is connected to the fourth core network device 1110 belonging to the fourth operator.

At operation S1202, after receiving the second setup request message, the third physical base station 1150 stores the topological connection information between the fourth physical base station 1170 and each core network device, and sends a second setup request response message to the fourth physical base station 1170.

The second setup request response message includes: the topological connection information between the third physical base station 1150 and each core network device. For example, the third physical base station 1150 includes: the ninth logical base station 1151 and the tenth logical base station 1152; the ninth logical base station 1151 is connected to the seventh core network device 1140, and the seventh core network device 1140 is a core network device belonging to the third operator; and the tenth logical base station 1152 is connected to the fifth core network device 1120 belonging to the fourth operator.

It should be noted that, through the operations S1201 and S1202, each of the third physical base station 1150 and the fourth physical base station 1170 can acquire the topological connection information of the other physical base station at an opposite side, so as to facilitate a subsequent handover between the logical base stations of the two physical base stations, thereby guarantying the accuracy of the handover type. In a case where AMF region information is changed, each physical base station can notify other physical base stations of the updated AMF region information by sending a node configuration update message of a radio access network, so as to guarantee synchronous updating of the AMF region information between the physical base stations.

At operation S1203, a mobile terminal 1201 providing a communication service based on the third operator sends a measurement report message to the ninth logical base station 1151.

At operation S1204, the ninth logical base station 1151, by repeatedly obtaining the measurement report message sent by the mobile terminal 1201, learns that the current communication quality of the mobile terminal 1201 is relatively poor and the mobile terminal 1201 desires to be handed over to a cell corresponding to the seventh logical base station 1173, so as to improve the communication quality of the mobile terminal 1201.

At operation S1205, the ninth logical base station 1151 determines, according to the information obtained in the operations S1201 to S1204, that a handover type of a handover from the ninth logical base station 1151 to the seventh logical base station 1173 is based on the NG interface.

The ninth logical base station 1151 can know, from the topological connection information, obtained in the operation S1201, between the fourth physical base station 1170 and each core network device, that the ninth logical base station 1151 is connected to the seventh core network device 1140, the seventh logical base station 1173 is connected to the sixth core network device 1130, there is no core device commonly connected between the ninth logical base station 1151 and the seventh logical base station 1173, so that a handover based on the Xn interface cannot be performed between the ninth logical base station 1151 and the seventh logical base station 1173, and a handover based on the NG handover i.e., a handover in which the AMF entity is to be switched over, is expected to be performed.

In some implementations, the ninth logical base station 1151 may also determine the handover type according to the acquired information of the carrier used by the seventh logical base station 1173. For example, the ninth logical base station 1151 may learn, through information interaction with the seventh logical base station 1173, that the seventh logical base station 1173 uses the second carrier as a transmission bearer for carrying communication information, but the ninth logical base station 1151 uses the first carrier as a transmission bearer for carrying communication information, and the two logical base stations have different carrier information (i.e., information of carriers), and thus it can be directly determined that a handover based on the NG interface between the ninth logical base station 1151 and the seventh logical base station 1173 is expected to be performed, a determination of the handover type can be accelerated, and the efficiency of the handover is improved.

At operation S1206, the handover based on the NG interface is performed between the ninth logical base station 1151 and the seventh logical base station 1173 through the seventh core network device 1140 and the sixth core network device 1130.

It should be noted that the tenth logical base station 1152 and the eighth logical base station 1174 both belong to the fourth operator, and therefore, if a handover is expected to be performed between the tenth logical base station 1152 and the eighth logical base station 1174, a handover based on the NG interface is also expected to be performed between the tenth logical base station 1152 and the eighth logical base station 1174, and specific operations of the handover are similar to operations S1201 to S1206, and thus are not repeated herein.

In the example, by acquiring topological connection relationships between different physical base stations and core network devices, a complex network connection relationship can be simplified, so that the third physical base station 1150 can timely learn the topological connection relationship of the fourth physical base station 1170 connected to the third physical base station 1150, a misjudgment of the handover type is avoided, and the accuracy of the handover is improved.

It should be understood that the present application is not limited to the specific configurations and processes described above and illustrated in the accompanying drawings. For convenience and simplicity of description, detailed description of known methods is omitted in the present application, and specific operation processes of the system, the apparatus and the base station described above may refer to corresponding processes of the above method, and are not repeated here.

Fig. 13 is a schematic diagram of exemplary hardware architecture of a computing device for implementing an inter-base-station handover method or an inter-base-station handover apparatus according to the present application.

As shown in Fig. 13, the computing device 1300 includes an input device 1301, an input interface 1302, a central processing unit (CPU) 1303, a memory 1304, an output interface 1305, and an output device 1306. The input interface 1302, the CPU 1303, the memory 1304, and the output interface 1305 are connected via a bus 1307, and the input device 1301 and the output device 1306 are connected to the bus 1307, and further connected to other components of the computing device 1300, via the input interface 1302 and the output interface 1305, respectively.

Specifically, the input device 1301 receives input information from outside and transmits the input information to the CPU 1303 through the input interface 1302; the CPU 1303 processes the input information based on computer-executable instructions stored in the memory 1304 to generate output information, temporarily or permanently stores the output information in the memory 1304, and then transmits the output information to the output device 1306 through the output interface 1305; the output device 1106 outputs the output information outside of the computing device 1300 for users.

In some implementations, the computing device shown in Fig. 13 may be implemented as an electronic device including: a memory configured to store a computer program; and a processor configured to execute the computer program stored in the memory to perform the inter-base-station handover method described above.

In some implementations, the computing device shown in Fig. 13 may be implemented as an inter-base-station handover system including: a memory configured to store a computer program; and a processor configured to execute the computer program stored in the memory to perform the inter-base-station handover method described above.

The present application further provides a computer-readable storage medium having a computer program stored thereon, the computer program, executed by a processor, causes the processor to perform the inter-base-station handover method described above.

The above description is only for exemplary implementations of the present application, but is not intended to limit the scope of the present application. In general, the present application may be implemented in hardware or special purpose circuits, software, logic or any combination thereof. For example, some aspects may be implemented in hardware, while other aspects may be implemented in firmware or software which may be executed by a controller, a microprocessor or other computing devices, although the present application is not limited thereto.

The present application may be implemented by a data processor of a mobile device executing computer program instructions, for example in a processor entity, or by hardware, or by a combination of software and hardware. The computer program instructions may be assembler instructions, instruction set architecture (ISA) instructions, machine instructions, machine-related instructions, microcode, firmware instructions, state setting data, or source or object code written in any combination of one or more programming languages.

The block diagram of any logical flowchart in the accompanying drawings of the present application may represent program operations; or may represent interconnected logic circuits, modules, and functions; or may represent a combination of program operations and logic circuits, modules, and functions. The computer program may be stored in the memory. The memory may be of any type suitable for the local technical environment and may be implemented by using any suitable data storage technology, such as, but is not limited to, a Random Access Memory (RAM), a Read-Only Memory (ROM), an optical storage device and system (a digital video disc (DVD) or a compact disc(CD)) and the like. The computer-readable medium may include a non-transitory storage medium. The data processor may be of any type suitable for the local technical environment, such as, but is not limited to, a general computer, a specific computer, a microprocessor, a digital signal processor (DSP), an application specific integrated circuit (ASIC), a field programmable gate array (FPGA), and a processor based on a multi-core processor architecture.

Through exemplary and non-limiting examples, a detailed description of the exemplary implementations of the present application is provided above. Various modifications and variants may be apparent to those skilled in the relevant art with reference to the accompanying drawings and the appended claims, without departing from the scope of the application. Accordingly, the proper scope of the present application is to be determined by the claims.

## Claims

1. An inter-base-station handover method, comprising:
determining a handover type according to acquired target base station information and source base station information, the source base station information being configuration information of a source base station providing a communication service for a terminal to be handed over, the target base station information being configuration information of a target base station; and
handing over a service of the terminal to be handed over from the source base station to the target base station according to the handover type.

2. The method of claim 1, wherein the determining a handover type according to acquired target base station information and source base station information comprises:
acquiring context information and target base station information of the terminal to be handed over, the context information comprising source topological connection information representing information of an access and mobility management function, AMF, entity connected with the source base station corresponding to the terminal to be handed over, the target base station information comprising target topological connection information between the target base station and an AMF entity;
in response to that the service of the terminal to be handed over is to be handed over from the source base station to the target base station, determining a matching result according to the target topological connection information and the source topological connection information; and
determining the handover type according to the matching result.

3. The method of claim 2, wherein the source topological connection information comprises an identifier of a global radio access node connected to the source base station and an identifier of a first AMF;
the determining a matching result according to the target topological connection information and the source topological connection information comprises:
searching for the target topological connection information according to the identifier of the global radio access node connected to the source base station, and determining whether the target topological connection information comprises the identifier of the first AMF;
in response to that the target topological connection information comprises the identifier of the first AMF, determining the matching result is that the first AMF connected to the source base station is connected with the target base station; and
in response to that the target topological connection information does not include the identifier of the first AMF, determining the matching result is that the first AMF connected to the source base station is not connected with the target base station.

4. The method of claim 2, wherein the determining the handover type according to the matching result comprises:
in response to that the matching result is that the first AMF connected to the source base station is connected to the target base station, determining the handover type is based on an Xn interface; and
in response to that the matching result is that the first AMF connected to the source base station is not connected to the target base station, determining the handover type is based on an NG interface,
wherein a handover based on the Xn interface represents that the AMF is not to be swiched over during the handover between the source base station and the target base station, a handover based on the NG interface represents that the AMF is to be switched over during the handover between the source base station and the target base station.

5. The method of claim 1 or 2, further comprising:
after handing over the service of the terminal to be handed over from the source base station to the target base station according to the handover type, in response to that AMF region information is changed, updating the target topological connection information and the source topological connection information.

6. The method of claim 1, wherein the source base station information further comprises: information of a first carrier used by the source base station for providing the communication service for the terminal to be handed over;
the target base station information further comprises: information of a second carrier used by the target base station for providing a communication service for the terminal to be handed over;
the determining a handover type according to acquired target base station information and source base station information comprises:
in response to that the service of the terminal to be handed over is to be handed over from the source base station to the target base station, determining the handover type according to the information of the first carrier and the information of the second carrier.

7. The method of claim 6, wherein the information of the first carrier comprises:
an identifier of the first carrier and an identifier of an operator to which the first carrier belongs, the information of the second carrier comprises: an identifier of the second carrier and an identifier of an operator to which the second carrier belongs;
the determining the handover type according to the information of the first carrier and the information of the second carrier comprises:
in response to that the identifier of the operator to which the first carrier belongs is the same as the identifier of the operator to which the second carrier belongs, comparing the identifier of the first carrier with the identifier of the second carrier to obtain a comparison result; and
in response to that the comparison result is that the identifier of the first carrier and the identifier of the second carrier are different, determining the handover type is based on a NG interface.

8. The method of any one of claims 1 to 7, wherein the source base station comprises: a physical base station or a logical base station, the target base station comprises: a physical base station or a logical base station;
wherein the logical base station is a base station based on an identifier of an operator, or, a base station based on different service types of a same operator.

9. The method of any one of claims 1 to 7, further comprising:
before determining the handover type according to the acquired target base station information and the acquired source base station information, establishing a stream control transmission protocol link and a link based on an Xn interface between the source base station and the target base station.

10. The method of any one of claims 1 to 7, further comprising:
before determining the handover type according to the acquired target base station information and the acquired source base station information, acquiring communication information of the terminal to be handed over; and
determining whether the service of the terminal to be handed over is to be handed over from the source base station to the target base station according to the communication information of the terminal to be handed over.

11. The method of claim 10, wherein the communication information of the terminal to be handed over comprises: a first communication quality based on the source base station, or, the first communication quality based on the source base station and a second communication quality based on the target base station;
the determining whether the service of the terminal to be handed over is to be handed over from the source base station to the target base station according to the communication information of the terminal to be handed over comprises:
in response to that the first communication quality is not within a preset quality threshold range or the second communication quality is better than the first communication quality, determining that the service of the terminal to be handed over is to be handed over from the source base station to the target base station.

12. An inter-base-station handover apparatus, comprising:
a handover type determination module configured to determine a handover type according to acquired target base station information and source base station information, the source base station information being configuration information of a source base station providing a communication service for a terminal to be handed over, the target base station information being configuration information of a target base station; and
a handover module configured to hand over a service of the terminal to be handed over from the source base station to the target base station according to the handover type.

13. A base station, comprising:
an inter-base-station handover apparatus configured to implement the inter-base-station handover method according to any one of claims 1 to 11.

14. An electronic device, comprising:
at least one processor; and
a memory having at least one computer program stored thereon, the at least one computer program, executed by the at least one processor, causes the at least one processor to implement the inter-base-station handover method according to any one of claims 1 to 11.

15. A computer-readable storage medium having a computer program stored thereon, the computer program, executed by a processor, causes the processor to implement the inter-base-station handover method according to any one of claims 1 to 11.
